# EUROPÄISCHE PATENTANMELDUNG

(11) **EP 1 637 202 A2**
(43) Veröffentlichungstag der Anmeldung: **22.03.2006**
(21) Anmeldenummer: 05020091.4
(22) Anmeldetag: 15.09.2005
(51) Int. Cl.: B01D 7/02, C01F 7/58

(54) **Desublimator für Aluminiumchlorid**

(30) Priorität: 16.09.2004 DE 102004044934
(71) Anmelder: BASF Aktiengesellschaft, 67056 Ludwigshafen (DE)
(72) Erfinder: Schläfer, Dieter, Dr., 67071 Ludwigshafen (DE); Schlimper, Hans-Ulrich, Dr., 67373 Dudenhofen (DE)
(74) Vertreter: Isenbruck, Günter

(57) **Zusammenfassung**

Die Erfindung betrifft einen Desublimator zur Erzeugung von partikelförmigem, festem Aluminiumchlorid aus Aluminiumchlorid-Dampf, gebildet aus einem allseitig geschlossenen Behälter mit vertikalen Wänden, mit einer Zuführungsstelle für den Aluminiumchlorid-Dampf und einer Abzugsstelle für das feste Aluminiumchlorid, dadurch gekennzeichnet, dass die Wände des Behälters aus ebenen Blechen gebildet sind, die in einem starren Rahmen dergestalt eingeschweißt sind, dass sie durch Aufschlag mit einem Klopfer in Schwingung versetzt werden können.

## Beschreibung

Die Erfindung betrifft einen Desublimator zur Erzeugung von partikelförmigem, festem Aluminiumchlorid aus Aluminiumchlorid-Dampf.

Aluminiumchlorid wird großtechnisch durch Elementarsynthese aus geschmolzenem Aluminium und Chlor hergestellt. Die Reaktion findet bei etwa 700 bis 750 °C statt und ist stark exotherm. Industriell wird die Reaktion häufig in relativ kleinen Syntheseeinheiten, mit Kapazitäten im Bereich von etwa 80 bis 100 kg/h, durchgeführt.

Das entstehende Aluminiumchlorid ist unter den Reaktionsbedingungen dampfförmig, da Aluminiumchlorid bei Temperaturen oberhalb von 180 °C als Dimeres sublimiert. Der Aluminiumchlorid-Dampf gelangt über eine Rohrleitung in einen luftgekühlten Behälter, einem Desublimator, worin sich beim Abkühlen das Aluminiumchlorid, vorzugsweise an den Wänden, in fester Form, abscheidet.

Bei Anlagen nach dem Stand der Technik haben die als Desublimatoren eingesetzten Behälter eine zylindrische Geometrie mit kreisförmiger Grundfläche, wobei der Zylindermantel an seinem unteren Ende in einen schrägen Konus ausläuft.

Zur Abreinigung des an den Wänden abgeschiedenen festen Aluminiumchlorids sind an der Außenseite des Desublimators pneumatische Klopfer installiert.

Im Betrieb hat sich gezeigt, dass aufgrund der starren Behältergeometrie die Klopferwirkung nur bis zu einer begrenzten Entfernung vom Schlagpunkt eintritt, so dass es immer wieder zu Anbackungen an nicht erregbaren Wandteilen kommt.

Diese Anbackungen können nur manuell, durch äußere Hammereinwirkung, zum Abfallen gebracht werden oder müssen im Extremfall durch ein aufwändiges Abreinigen mit Presslufthämmern entfernt werden. Dieser Extremfall bedeutet eine Außerbetriebnahme der kompletten Syntheseeinheit.

Ein weiterer Nachteil der zusätzlichen manuellen Abreinigung mit Hämmern ist eine nicht zu vermeidende Verformung des Desublimators durch Beulenbildung, was die Starrheit des Apparates weit erhöht und zu einem mechanischen Stress für das Wandmaterial bis hin zur Rissbildung führt.

Es war demgegenüber Aufgabe der Erfindung, einen Desublimator zur Verfügung zu stellen, der die Nachteile des Standes der Technik nicht aufweist und der insbesondere keiner manuellen Einwirkung zum Ablösen des festen Aluminiumchlorids von den Wänden bedarf.

Die Aufgabe wird durch einen Desublimator zur Erzeugung von partikelförmigem, festem Aluminiumchlorid aus Aluminiumchlorid-Dampf gelöst, der aus einem allseitig geschlossenen Behälter mit vertikalen Wänden gebildet ist, mit einer Zuführungsstelle für den Aluminiumchlorid-Dampf und einer Abzugsstelle für das feste Aluminiumchlorid, und der dadurch gekennzeichnet ist, dass die Wände des Behälters aus ebenen Blechen gebildet sind, die in einem starren Rahmen dergestalt eingeschweißt sind, dass sie durch Aufschlag mit einem Klopfer in Schwingung versetzt werden können.

Es wurde gefunden, dass es für das Ablösen des durch Desublimation gebildeten festen Aluminiumchlorids von den Wänden des Desublimators ganz entscheidend ist, dass die Wände eine hohe Ebenheit aufweisen und darüber hinaus in der Weise zusammengesetzt sind, dass sie sich unter Einwirkung eines Aufschlages wie schwingende Membranen verhalten.

Für die konkrete Auswahl der Werkstoffklasse bezüglich der Ebenheit ist aufgrund der obigen Zusammenhänge die höchste Toleranzklasse nach DIN EN ISO 13920, die Toleranzklasse E, besonders bevorzugt. Aus wirtschaftlichen Überlegungen kann auch die Toleranzklasse F gewählt werden.

Ein Werkstoff erfüllt die Toleranzklasse E nach DIN EN ISO 13920, wenn er beispielsweise im Nennmaßbereich I von über 2000 bis 4000 mm eine Toleranz t von 3 mm nicht überschreitet. In der niedrigeren Toleranzklasse F beträgt die Toleranz t für den selben Nennmaßbereich 6 mm.

Bleche mit Ebenheiten in den obigen Toleranzbereichen können bevorzugt durch Punktschweißen, insbesondere nach dem Flammrichtverfahren, erhalten werden. Ausführungen hierzu finden sich beispielsweise in Richard Pfeiffer: Handbuch der Flammrichttechnik: Metallurgie, Verfahren, Geräte und Anwendungsbeispiele, Deutscher Verlag für Schweißtechnik DVS-Verlag, Düsseldorf, 1996, worin auf Seite 2, Ziffer 1.2.1 unter Verweisung auf das Stahl-Eisen-Werkstoffblatt SEW 088 das Flammrichten wie folgt definiert wird: "Unter Flammrichter versteht man eine schnelle und örtliche Erwärmung eines Bauteils mit kurzer Verweildauer auf Flammrichttemperatur mit dem Ziel, dem Bauteil eine gewünschte Form zu geben oder Formabweichungen zu beseitigen. Die Erwärmung kann sich auf den oberflächennahen Bereich beschränken oder auch durchgreifend sein. Unter der Flammrichttemperatur wird die höchste während des Flammrichtvorgangs im Bauteil auftretende Temperatur verstanden".

Als Werkstoff für die die Wände bildenden Bleche wird bevorzugt ein Feinkornbaustahl gewählt, insbesondere Feinkornbaustahl P 355 NH. Die bevorzugte Materialstärke für die Wände liegt bei 5 oder 6 mm.

Die vertikalen Wände des Desublimators bilden die Seitenflächen eines Prismas, bevorzugt eines Prismas mit quadratischer Grundfläche.

Die die Wände bildenden Bleche werden in einen starren Rahmen eingeschweißt, dergestalt, dass sie durch Aufschlag mit einem Klopfer in Schwingung versetzt werden können.

Die Einschweißung der Bleche in den Rahmen erfolgt bevorzugt nach Schweißverfahren mit wenig Wärmeeintrag, die entsprechend wenig oder keine Gefügeveränderung sowie wenig oder keine Einbrandkerben verursachen. Ein derartiges Verfahren ist beispielsweise das Wolfram-Inertgas-Verfahren (WIG-Verfahren)

Die Schweißnähte werden bevorzugt innen im Behälter blecheben verschliffen und außen am Behälter kerbarm ausgeführt.

Der Rahmen weist Eckwinkel auf, die vorteilhaft kalt, über eine Abkantbank verformt und anschließend spannungsarm bei 580°C geglüht werden.

Der Desublimator selbst ist nicht starr, insbesondere über Gummipuffer aufgehängt; ebenso ist die Anschlussleitung für den Abzug des festen Aluminiumchlorids aus dem Desublimator am unteren Ende desselben nicht starr, über Kompensatoren, befestigt.

Um das Abziehen des Produktes zu erleichtern, läuft der Desublimator am unteren Ende des Teiles mit vertikalen Wänden bevorzugt in einen Konus aus, besonders bevorzugt in einen schrägen Konus.

Der Konus ist vorteilhaft nach demselben Bauprinzip wie der Teil mit vertikalen Wänden ausgeführt, d.h. aus einer starren Rahmenkonstruktion mit darin angeschweißten Seitenteilen, die in Schwingung versetzt werden können.

Besonders vorteilhaft kann der Desublimator dreiteilig ausgeführt werden, d.h. aus zwei übereinander angeordneten, bevorzugt baugleichen prismatischen Bauteilen mit vertikalen Wänden und einem unteren, konusförmigen Bauteil, wobei die Bauteile untereinander durch Flansche verbunden sind.

Die die Seitenflächen des Desublimators bildenden ebenen Bleche werden durch Aufschlag mit insbesondere pneumatischen Klopfern in Schwingung versetzt. Für den reibungslosen Betrieb des erfindungsgemäßen Desublimators ist es in der Regel ausreichend, an jedem ebenen Blech jeweils einen Klopfer anzubringen. Vorteilhaft sind die Klopfer auf Klopferstühlen fixiert, wobei die Klopferstühle einstückig, d.h. vollständig ohne Schweißnähte ausgebildet, insbesondere aus Rundmaterial gefräst und an den äußeren Wänden des Desublimators ebenfalls ohne Schweißnähte, bevorzugt über Schrauben, befestigt sind.

Im Folgenden wird die Erfindung anhand einer Zeichnung und eines Ausführungsbeispiels näher erläutert.

Es zeigen im Einzelnen:
- Figur 1: die schematische Darstellung einer bevorzugten Ausführungsform eines Desublimators nach der Erfindung, mit Querschnittsdarstellung in Figur 1 A,
- Figur 2: die schematische Darstellung einer weiteren bevorzugten Ausführungsform eines Desublimators nach der Erfindung, mit Querschnittsdarstellung in Figur 2A und
- Figur 3: die schematische Darstellung eines Desublimators nach dem Stand der Technik, mit Querschnittsdarstellung in Figur 3A.

In der Zeichnung bedeuten gleiche Bezugszeichen jeweils gleiche oder entsprechende Bauteile.

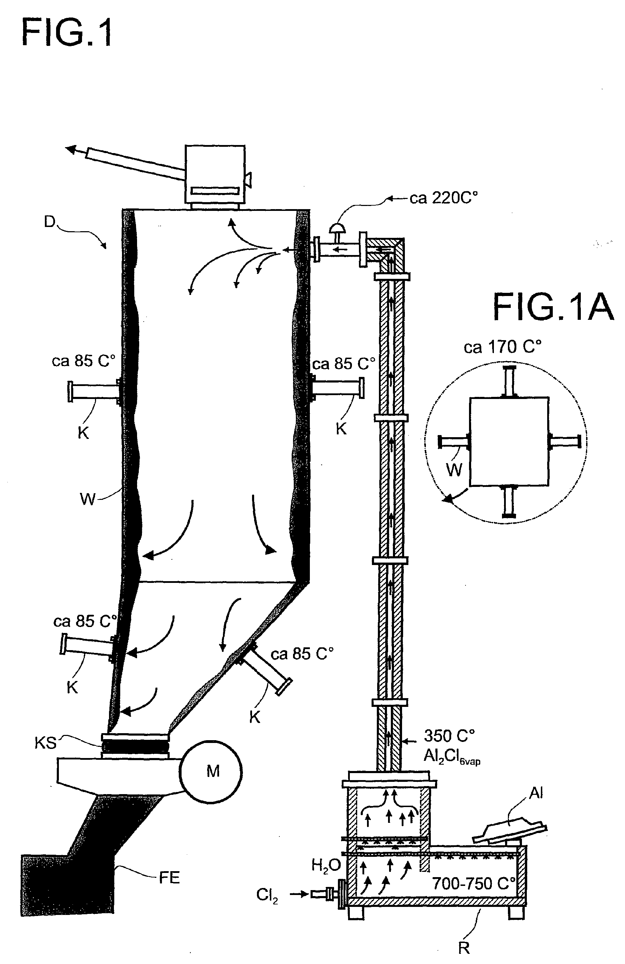

Figur 1 zeigt schematisch einen Synthesereaktor R, in dem Aluminiumbarren Al zu einem Aluminiumbad (Badtemperatur 700 bis 750 °C) aufgeschmolzen werden. In das Aluminiumbad wird als gasförmiger Chlorstrom (Cl₂), im unteren Bereich desselben, eingeleitet. Durch Elementarsynthese entsteht Aluminiumchlorid, das unter den Reaktionsbedingungen dampfförmig ist, mit Wasser gekühlt wird und bei etwa 350 °C als Dimeres (Al₂Cl₆ᵥₐₚ) über eine Abzugsleitung in den Desublimator geleitet wird. In der Abzugsleitung kühlt der Aluminiumchlorid-Dampf bis zum Eintritt in den Desublimator bis auf etwa 220 °C ab. Der Eintritt in den Desublimator ist in der in der Figur dargestellten bevorzugten Ausführungsform im oberen Bereich desselben positioniert.

Der Desublimator D ist ein allseitig geschlossener Behälter mit vertikalen Wänden W, der im unteren Bereich als schräger Konus ausläuft. Am oberen Deckel des Behälters sind ein Sicherheitsventil und ein Abzug für die Abluft vorgesehen.

Der untere, konische Teil des Desublimators D ist über einen Kompensator K und einen Motor M mit einer Fördereinheit FE, bevorzugt einem Trogkettenförderer, verbunden.

An den Wänden W des Desublimators D ist jeweils ein Klopfer K über eine Schraubverbindung angebracht.

Die Querschnittsdarstellung in Figur 1A verdeutlicht den quadratischen Grundriss des Behälterteils mit vertikalen Wänden W.

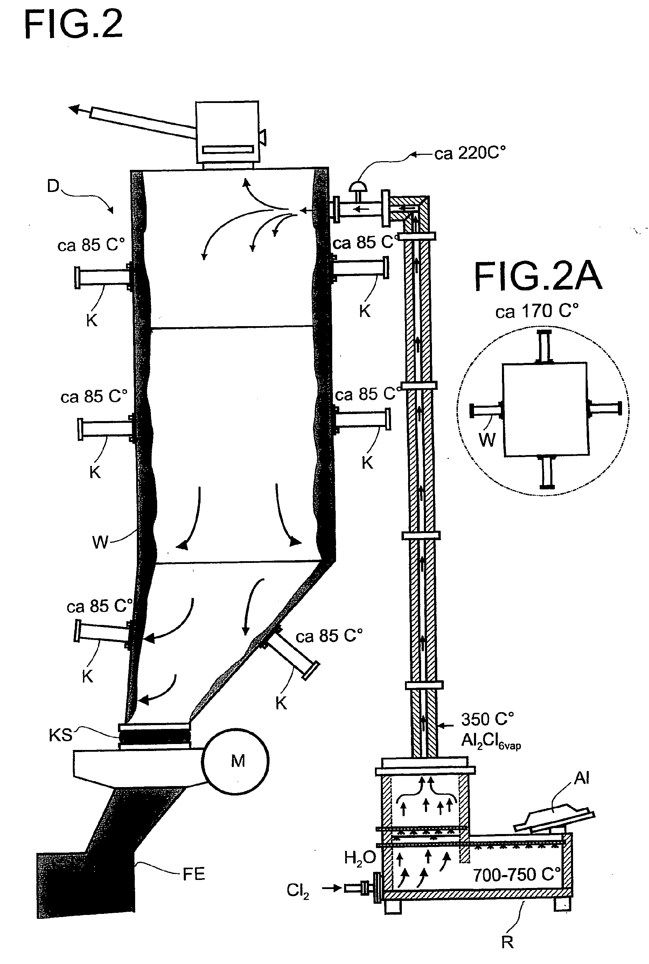

Figur 2 zeigt schematisch eine weitere bevorzugte Ausführungsform eines Desublimators D, der abweichend von der in Figur 1 dargestellten Ausführungsform dreiteilig ausgebildet ist, d.h. mit zwei übereinander angeordneten und miteinander durch Flansche verbundenen prismatischen Bauteilen mit vertikalen Wänden W, wobei der untere Bauteil in einem schrägen Konus ausläuft. Gegenüber der Ausführungsform in Figur 1 mit insgesamt 8 Klopfern sind in dieser, dreiteiligen Ausführungsform, insgesamt 12 Klopfer, d.h. je 1 Klopfer pro Wand, vorgesehen.

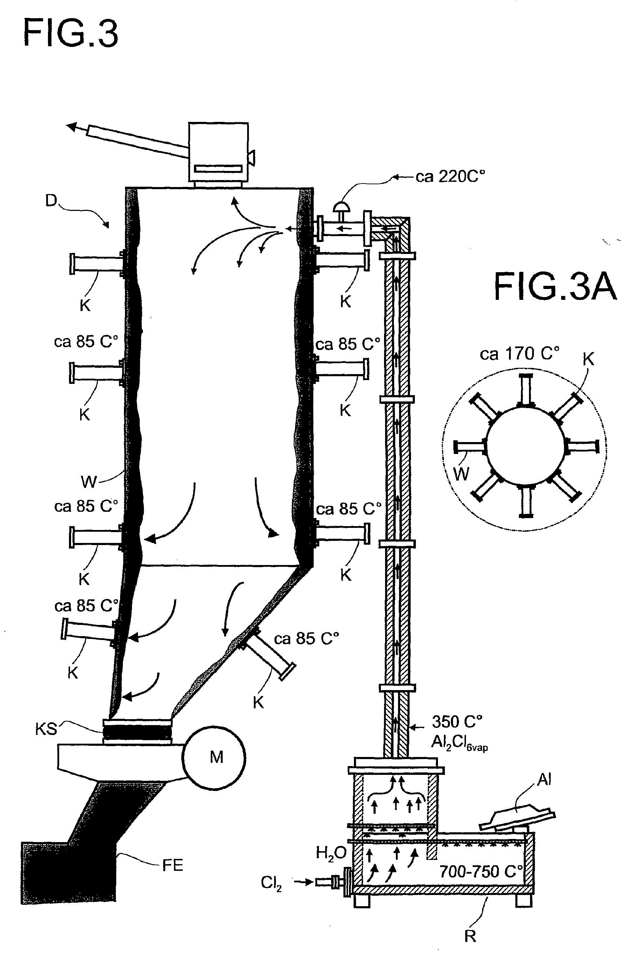

In der schematischen Darstellung eines Desublimators nach dem Stand der Technik in Figur 3 ist zunächst lediglich zu erkennen, dass eine größere Klopferanzahl K erforderlich ist.

Den wesentlichen Unterschied zur Erfindung zeigt die Querschnittsdarstellung in Figur 3A, die den kreisförmigen Grundriss des Behälterteils mit vertikalen Wänden und darüber hinaus die wesentlich höhere Klopferanzahl verdeutlicht.

### Ausführungsbeispiele

### 1. nach dem Stand der Technik

Ein typischer Desublimator nach dem Stand der Technik ist ein Behälter in Form eines geraden, vertikalen Zylinders mit einer Länge von 4,30 m, einer kreisförmigen Grundfläche mit einem Durchmesser von 1,60 m, an den sich im unteren Bereich ein schräger Konus mit einer Länge von 2,34 m anschließt. Der Desublimator ist aus Baustahl STE 355 der Materialstärke 5 mm gebildet.

Zur Abreinigung des Produktes von den Innenwänden des Desublimators sind an den Außenwänden insgesamt 23 pneumatische Klopfer installiert, die sich wie folgt über die Oberfläche verteilen: 16 Klopfer auf den geraden Zylinder und 7 Klopfer auf den Konus.

Im Betrieb hat sich gezeigt, dass die Wände durch alleinige Einwirkung der pneumatischen Klopfer nicht abgereinigt werden können. Darüber hinaus ist eine manuelle Hammereinwirkung zwingend erforderlich, im Extremfall sogar das Abreinigen mit Presslufthämmern. Die Desublimatoren zeigen durch die Hammereinwirkung starke Verbeulungen mit der Gefahr der Rissbildung.

### 2. nach der Erfindung

Demgegenüber wurde ein Desublimator nach der Erfindung mit gleicher Kapazität als vertikaler Quader mit quadratischer Grundfläche, mit einer Seitenlänge der Grundfläche von 1,36 m und einer Kantenlänge des Quaders von 4,323 m gebaut, an den sich ein schräger Konusteil der Länge 2,457 m anschließt. Der quaderförmige wie auch der konische Behälterteil waren jeweils aus ebenen Blechen aus Baustahl STE 355, der Materialstärke 6 mm, mit einer Ebenheit entsprechend der Toleranzklasse F nach DIN EN ISO 13920 gefertigt, die jeweils in einen starren Rahmen nach dem Wolfram-Inertgas-Verfahren eingeschweißt waren. Das Innenvolumen des Desublimators von 10,68 m³ entsprach in etwa dem Innenvolumen des Desublimators nach dem Stand der Technik (10,50 m³).

An jedem abzureinigenden ebenen Blech war an der Außenwand jeweils ein einziger pneumatischer Klopfer installiert. Entsprechend betrug die Gesamtzahl der Klopfer für den Desublimator 8, d.h. 4 Klopfer für die vertikalen Seitenwände des quadratischen Behälterteils und 4 Klopfer für die Seitenwände des konusförmigen, unteren Bauteils.

Im Betrieb zeigte es sich, dass die Klopfer durch den auf die Fläche einwirkenden Schlagimpuls jeweils die gesamte Fläche der Wand in Schwingung versetzen, was zu einem Abfall des auf der Wand niedergeschlagenen Produktes führt.

Auch in einem mehrjährigen Versuchsbetrieb war über die Einwirkung der pneumatischen Klopfer hinaus keine zusätzliche manuelle Abreinigung mittels externer Hammereinwirkung erforderlich.

Darüber hinaus hat sich gezeigt, dass auch im Falle von störungsbedingtem, außerordentlich dickem Schichtaufbau auf den Wänden infolge des Ausfalls von Klopfern das Produkt ausschließlich durch Verlängerung der Klopfzeiten mechanisch, ohne manuelle Einwirkung, entfernt werden konnte.

Die Vorzüge des erfindungsgemäßen Desublimatortyps liegen somit in der ausschließlich mechanischen Abreinigung, ohne dass ein manuelles Abreinigen erforderlich wäre, mit der Folge, dass keine schädigende Verformung erfolgt, der Instandhaltungsaufwand reduziert und damit der kontinuierliche Betrieb der Syntheseeinheit verbessert wird. Darüber hinaus ist auch der Aufwand für die Installation und den Betrieb der pneumatischen Klopfer, aufgrund der wesentlich verringerten Anzahl derselben, entsprechend niedriger.

## Patentansprüche

1. Desublimator zur Erzeugung von partikelförmigem, festem Aluminiumchlorid aus Aluminiumchlorid-Dampf, gebildet aus einem allseitig geschlossenen Behälter mit vertikalen Wänden, mit einer Zuführungsstelle für den Aluminiumchlorid-Dampf und einer Abzugsstelle für das feste Aluminiumchlorid, **dadurch gekennzeichnet, dass** die Wände des Behälters aus ebenen Blechen gebildet sind, die in einem starren Rahmen dergestalt eingeschweißt sind, dass sie durch Aufschlag mit einem Klopfer in Schwingung versetzt werden können.

2. Desublimator nach Anspruch 1, **dadurch gekennzeichnet, dass** der allseitig geschlossene Behälter im unteren Bereich desselben in einem bevorzugt schrägen Konus ausläuft.

3. Desublimator nach Anspruch 1 oder 2, **dadurch gekennzeichnet, dass** die Ebenheit der die Wände bildenden Bleche der Toleranzklasse F nach DIN EN ISO 13920, bevorzugt der Toleranzklasse E nach DIN EN ISO 13920, entspricht.

4. Desublimator nach Anspruch 3, **dadurch gekennzeichnet, dass** die Ebenheit der die Wände bildenden Bleche durch Punktschweißen, bevorzugt nach dem Flammrichtverfahren, erzeugt wird.

5. Desublimator nach einem der Ansprüche 1 bis 4, **dadurch gekennzeichnet, dass** die ebenen Bleche die Seitenflächen eines Prismas, bevorzugt eines Prismas mit quadratischer Grundfläche, bilden.

6. Desublimator nach einem der Ansprüche 1 bis 5, **dadurch gekennzeichnet, dass** der Rahmen, in den die ebenen Bleche eingeschweißt sind, Eckwinkel aufweist, die nach dem Umformen spannungsarm geglüht wurden.

7. Desublimator nach einem der Ansprüche 1 bis 6, **dadurch gekennzeichnet, dass** der Werkstoff für die ebenen Bleche ein Feinkornbaustahl, insbesondere Feinkornbaustahl P 355 NH ist und dass die Dicke der Bleche 5 oder 6 mm beträgt.

8. Desublimator nach einem der Ansprüche 1 bis 7, **dadurch gekennzeichnet, dass** die ebenen Bleche in den Rahmen nach dem WIG-Verfahren eingeschweißt sind, wobei die Schweißnähte bevorzugt innen im Behälter blecheben verschliffen und außen am Behälter kerbarm ausgeführt sind.

9. Desublimator nach einem der Ansprüche 1 bis 8, **dadurch gekennzeichnet, dass** er dreiteilig ausgebildet ist, aus zwei übereinander angeordneten, bevorzugt baugleichen prismatischen Bauteilen und einem unteren, konusförmigen Bauteil.

10. Desublimator nach einem der Ansprüche 1 bis 9, **dadurch gekennzeichnet, dass** die Klopfer, die die Wände des Desublimators durch Aufschlag in Schwingung versetzen, auf Klopferstühlen fixiert sind, wobei die Klopferstühle einstückig ausgebildet und an den Wänden des Desublimators verschraubt sind.
